# EUROPÄISCHE PATENTANMELDUNG

(11) **EP 1 106 948 A2**
(43) Veröffentlichungstag der Anmeldung: **13.06.2001**
(21) Anmeldenummer: 00122939.2
(22) Anmeldetag: 21.10.2000
(51) Int. Cl.: F28B 1/06

(54) **Vorrichtung zum Kondensieren von Dampf**

(30) Priorität: 08.12.1999 DE 19959237
(71) Anmelder: Wiesheu GmbH, 71563 Affalterbach (DE)
(72) Erfinder: Sigle, Andreas, 71381 Weinstadt (DE); Bender, Ella, 71672 Marbach (DE)
(74) Vertreter: Gahlert, Stefan, Dr.-Ing.

(57) **Zusammenfassung**

Es wird eine Vorrichtung zum Kondensieren von Dampf, mit einem Dampfkondensator (48), mit einem Gebläse (13), mit einer Eintrittsöffnung (24, 25, 26) zum Absaugen von Fluid angegeben, die über einen ersten Strömungsweg von einem ersten Eingang (49) des Dampfkondensators (48) mit einer Austrittsöffnung (28) zum Austritt von Fluid gekoppelt ist, wobei der Dampfkondensator (48) einen zweiten, vom ersten Strömungsweg vollständig getrennten Strömungsweg mit einem zweiten Eingang (51) und einem zweiten Ausgang (52) aufweist, wobei der erste Ausgang (59) mit einer Mischeinrichtung (13, 18) zur Zumischung von Kühlluft gekoppelt ist, und wobei der Ausgang der Mischeinrichtung (13, 18) mit dem zweiten Eingang des Dampfkondensators (48) gekoppelt ist. Es ergibt sich ein außerordentlich guter Wirkungsgrad bei der Behandlung von feuchter Abluft (Fig. 1).

## Beschreibung

Die Erfindung betrifft eine Vorrichtung zum Kondensieren von Dampf, mit einem Dampfkondensator, mit einem Gebläse, und einer Eintrittsöffnung zum Absaugen von Fluid, die über einen ersten Strömungsweg von einem ersten Eingang des Dampfkondensators zu einem ersten Ausgang des Dampfkondensators mit einer Austrittsöffnung zum Austritt von Fluid gekoppelt ist.

Eine derartige Vorrichtung ist aus der DE 88 08 218 U1 bekannt. Bei der bekannten Vorrichtung ist in einem Gehäuse ein Dampfkanal geführt, der seitlich zumindest teilweise von Kühlluftkanälen umschlossen ist, wobei der Dampfkanal und die Kühlluftkanäle in einem gemeinsamen Ausgangskanal münden, in dem sich die Luftströme vermischen. Der Dampfkanal besteht aus mehreren übereinanderliegenden horizontalen Abschnitten, die miteinander in Verbindung stehen, wobei zusätzlich Wasser eingespritzt wird, um die Dampfabscheidung zu verbessern.

Als nachteilig hat sich der geringe Wirkungsgrad der Vorrichtung und der zusätzliche Wasserverbrauch erwiesen.

Die Aufgabe der Erfindung besteht demnach darin, eine verbesserte Vorrichtung zum Kondensieren von Dampf zu schaffen, die einen verbesserten Wirkungsgrad aufweist und möglichst ohne zusätzliches Kühlwasser auskommt.

Diese Aufgabe wird erfindungsgemäß bei einer Vorrichtung gemäß der eingangs genannten Art dadurch gelöst, daß der Dampfkondensator einen zweiten, vom ersten Strömungsweg vollständig getrennten Strömungsweg mit einem zweiten Eingang und einem zweiten Ausgang aufweist, wobei der erste Ausgang mit einer Mischeinrichtung zur Zumischung von Kühlluft gekoppelt ist, und wobei der Ausgang der Mischeinrichtung mit dem zweiten Eingang des Dampfkondensators gekoppelt ist.

Die Aufgabe der Erfindung wird auf diese Weise vollkommen gelöst.

Der Dampfkondensator wird erfindungsgemäß in zweifacher Weise genutzt, nämlich mit einem ersten Strömungsweg, der von dem eintretenden Dampf durchströmt wird und auf dem die Kondensatabscheidung erfolgt, und mit einem zweiten Strömungsweg, der von Mischluft durchströmt wird, da dem aus dem ersten Strömungsweg austretenden Fluid Kühlluft zugemischt wird, so daß der zweite Strömungsweg zur Kühlung des eintretenden Dampfes genutzt wird. Dadurch erfolgt eine vollständige Kondensatabscheidung und darüber hinaus wird die durch den zweiten Strömungsweg strömende Mischluft gleichzeitig aufgeheizt, wodurch die Temperatur der aus der Vorrichtung austretenden Mischluft erhöht wird, so daß deren relative Feuchte gesenkt wird. Der Dampfkondensator wird somit als Wärmetauscher genutzt und dient einerseits auf seinem ersten Strömungsweg zur Kühlung und Auskondensation des eintretenden Fluids und andererseits auf seinem zweiten Strömungsweg zur Aufheizung des austretenden Fluids, so daß praktisch vollständig trockene Luft aus der erfindungsgemäßen Vorrichtung austritt.

Auf diese Weise wird gewährleistet, daß sich in dem Raum, in dem die erfindungsgemäße Vorrichtung betrieben wird, kein Kondensat bzw. keine Feuchte durch die Abluft aus der Vorrichtung bilden kann, da diese Abluft nur noch eine relativ geringe Restfeuchte aufweist.

Die erfindungsgemäße Vorrichtung benötigt im Gegensatz zum Stand der Technik keinerlei zusätzliche Kühlflüssigkeit und besitzt dennoch eine außerordentliche hohe Abscheidewirkung.

Gemäß einer vorteilhaften Weiterbildung der Erfindung weist der Dampfkondensator zwei einander gegenüberliegende Seitenwände auf, zwischen denen sich eine Mehrzahl von hohlen Lamellen erstreckt, zwischen denen der erste Strömungsweg gebildet ist, und innerhalb derer quer zum ersten Strömungsweg der zweite Strömungsweg gebildet ist.

Auf diese Weise wird nach dem Querstromprinzip ein intensiver Wärmeaustausch zwischen dem auf dem ersten Strömungsweg durch den Kondensator strömenden feuchten Fluid und der auf dem zweiten Strömungsweg durch den Kondensator strömenden trockenen Mischluft erreicht, wodurch eine außerordentlich gute Kühlung des eintretenden Fluids gewährleistet wird, um eine vollständige Auskondensierung zu erreichen und gleichzeitig die Mischluft auf dem zweiten Strömungsweg des Kondensators erheblich aufgeheizt wird, so daß deren relative Feuchte so stark abgesenkt wird, daß eine spätere Auskondensation von Wasserbestandteilen aus der aus der Vorrichtung austretenden Abluft sicher vermieden wird.

Grundsätzlich wäre jedoch auch eine Anordnung des ersten Strömungsweges und des zweiten Strömungsweges durch den Kondensator im Gegenstromprinzip denkbar.

Gemäß einer zusätzlichen Weiterbildung der Erfindung weist der Dampfkondensator eine Bodenfläche und eine Deckfläche auf, zwischen denen die Lamellen derart hintereinander angeordnet sind, daß sich mindestens ein mäanderförmiger Durchflußweg zwischen dem ersten Eingang und dem ersten Ausgang des Dampfkondensators ergibt.

Gemäß einem weiteren Merkmal der Erfindung sind die Lamellen zueinander parallel angeordnet, wobei benachbarte Lamellen abwechselnd die Deckfläche und die Bodenfläche berühren.

In zusätzlicher Weiterbildung der Erfindung könnend die Lamellen in Bezug auf die Deckfläche und Bodenfläche geneigt angeordnet sein.

Gemäß einem weiteren Merkmal der Erfindung sind die Lamellen zueinander parallel angeordnet, wobei jeweils von der Deckfläche und der Bodenfläche ausgehende Lamellen in der Mitte eine Durchtrittsöffnung freilassen, die von zwischen Bodenfläche und Deckfläche angeordneten Lamellen gefolgt sind, die zur Bodenfläche und zur Deckfläche hin jeweils eine Durchtrittsöffnung freilassen.

Durch diese Maßnahmen wird der Wärmeübergang zwischen dem auf dem ersten Strömungsweg durch den Kondensator strömenden Fluid und dem auf dem zweiten Strömungsweg durch den Kondensator strömenden Fluid stark verbessert und somit der Wirkungsgrad des Kondensators erhöht.

Gemäß einer weiteren besonders bevorzugten Ausgestaltung der Erfindung sind die jeweils oberen Lamellen und die jeweils unteren Lamellen zueinander parallel und geneigt zur Deckfläche bzw. zur Bodenfläche angeordnet, wobei jeweils von der Deckfläche und der Bodenfläche ausgehende Lamellen in der Mitte eine Druchtrittsöffnung freilassen, die von zwei in der Mitte winklig zusammenlaufenden Lamellen gefolgt sind, die zur Bodenfläche und zur Deckfläche hin jeweils eine Durchflußöffnung freilassen. Hieran schließen sich dann wiederum von der Deckfläche und von der Bodenfläche ausgehende Lamellen an, die in der Mitte eine Durchflußöffnung freilassen usw.

Mit einem derartigen Aufbau des Dampfkondensators wird ein äußerst intensiver Wärmeübergang zwischen dem auf dem ersten Strömungsweg durch den Kondensator strömenden feuchten Fluid und der auf dem zweiten Strömungsweg durch den Kondensator strömenden Mischluft gewährleistet und ein besonders hoher Wirkungsgrad des Kondensators erzielt.

In zusätzlicher Weiterbildung der Erfindung sind in der Bodenfläche des Kondensators Kondensatabflußöffnungen vorgesehen, die sich entgegen der Strömungsrichtung nach unten öffnen und unterhalb derer eine Kondensatauffangwanne vorgesehen ist.

Auf diese Weise wird eine geeignete Ableitung des Kondensats sichergestellt und gleichzeitig vermieden, daß Teile des auf dem ersten Strömungsweg durch den Kondensator strömenden feuchten Fluids durch die Kondensatabflußöffnungen und über die Kondensatauffangwanne nach außen gelangen.

In zusätzlicher Weiterbildung der Erfindung umfaßt die Mischeinrichtung das Gebläse, das saugseitig mit dem ersten Ausgang des Dampfkondensators verbunden ist und das saugseitig mit Ansaugöffnungen für Umgebungsluft verbunden ist.

Auf diese Weise wird die Zumischung von Kühlluft zu dem aus dem ersten Ausgang des Kondensators austretenden Fluid auf besonders einfache Weise unter Ausnutzung des ohnehin notwendigen Gebläses erreicht.

Hierbei ist das Gebläse vorzugsweise druckseitig mit dem zweiten Eingang des Kondensators verbunden.

Gemäß einer weiteren Ausführung der Erfindung mündet der zweite Ausgang des Kondensators in einen Austrittskanal, der zumindest teilweise um den Kondensator außen herumgeführt ist und diesen zumindest im Bereich seines ersten Eingangs kühlt.

Dadurch wird die Intensität der Kühlung auf dem ersten Strömungsweg durch den Kondensator strömenden feuchten Fluids verbessert und bereits eine Vorkühlung im Eingang erreicht, wodurch die Kondensatabscheidung und der Wirkungsgrad weiter verbessert werden.

Hierbei ist der erste Eingang des Kondensator vorzugsweise mit zumindest einem Rohr verbunden, das durch den Austrittskanal geführt ist.

Auf diese Weise wird die Intensität des Wärmeaustausches verbessert und das Gegenstromprinzip der Vorkühlung des in den Kondensator eintretenden feuchten Fluids genutzt.

Gemäß einer weiteren Ausgestaltung der Erfindung weist die erfindungsgemäße Vorrichtung ein geschlossenes Gehäuse auf, an dessen Vorderseite erste Ansaugöffnungen zur Absaugung von Wrasen vorgesehen sind und bei dem die Austrittsöffnung und die Eintrittsöffnung vorzugsweise an seiner Rückseite vorgesehen sind.

Einer derartigen Ausgestaltung der erfindungsgemäßen Vorrichtung läßt sich diese vorteilhaft als Dunstabzugshaube in Verbindung mit Öfen aller Art verwenden, oberhalb derer die erfindungsgemäße Vorrichtung angeordnet ist. Die Eintrittsöffnungen an der Vorderseite können hierbei genutzt werden, um beim Öffnen der Tür aus dem Ofenraum austretende Dämpfe abzusaugen.

In zusätzlicher Weiterbildung dieser Ausführung sind die ersten Ansaugöffnungen in einer Frontfläche des Gehäuses ausgebildet, wobei ein gegenüber der Frontfläche nach vorn vorstehender und nach unten offener Haubenvorsprung vorgesehen ist.

Hierdurch wird die Absaugwirkung für aus dem Ofenraum austretende Dämpfe verbessert.

Gemäß einer weiteren Ausführung der Erfindung sind zweite Ansaugöffnungen zur Ansaugung von Kühlluft an einer anderen Seite des Gehäuses vorgesehen.

Auf diese Weise wird auch dann, wenn über die ersten Ansaugöffnungen insbesondere bei geöffneter Tür eine größere Dampfmenge austritt, eine ausreichende Kühlwirkung gewährleistet, so daß eine wirkungsvolle Kondensatabscheidung bei allen Betriebszuständen gewährleistet ist.

Gemäß einer weiteren Ausgestaltung der Erfindung ist an der Rückseite mindestens ein Rohr für die Zuführung von Fluid in den Kondensator vorgesehen und mindestens ein Austrittsrohr für den Austritt von Fluid, wobei die zweiten Ansaugöffnungen an der Rückseite vorgesehen sind.

Auf diese Weise läßt sich eine günstige Zu- und Abführung der Zuluft bzw. Abluft gewährleisten, wobei gleichzeitig durch die Ansaugung von Kühlluft über die zweiten Ansaugöffnungen auch bei geöffneter Tür ausreichend kühle Luft über die zweiten Ansaugöffnungen angesaugt wird, wobei sich diese in einem ausreichenden Abstand von den ersten Ansaugöffnungen befinden.

Hierbei sollte gewährleistet sein, daß die zweiten Ansaugöffnungen sich in einem ausreichenden Abstand von einer Wandfläche befinden, was durch seitlich nach hinten hervorstehende Enden geschehen kann, zwischen denen ein Freiraum gebildet ist, innerhalb dessen die Zu- und Ableitungen vorgesehen sein können.

In zusätzlicher Weiterbildung der Erfindung ist vor dem ersten Ausgang des Kondensators eine Ablenkplatte zur Umlenkung von auf dem ersten Strömungsweg aus dem Kondensator austretenden Fluid angeordnet.

In zusätzlicher Weiterbildung dieser Ausführung sind die ersten Ansaugöffnungen und eine zwischen der Ablenkplatte und dem ersten Ausgang gebildete Zwischenkammer strömungsmäßig mit einer Saugseite des Gebläses verbunden.

Durch diese Maßnahmen wird eine gute Trennung zwischen dem aus dem ersten Ausgang des Kondensators austretenden Fluid und der über die ersten Ansaugöffnungen angesaugten Außenluft erreicht und sichergestellt, daß nicht ein Teil des Fluids aus dem ersten Ausgang des Kondensators über die ersten Ansaugöffnungen nach außen gelangt. Gleichzeitig wird durch diese Maßnahmen eine starke Schalldämmung erreicht, wodurch das Betriebsgeräusch der erfindungsgemäßen Vorrichtung stark gesenkt wird.

Gemäß einem weiteren Merkmal der Erfindung sind die zweiten Ansaugöffnungen an der Rückseite des Gehäuses angeordnet und strömungsmäßig mit der Saugseite des Gebläses verbunden.

Gemäß einem weiteren Merkmal der Erfindung ist der erste Eingang des Kondensators an der Rückseite des Gehäuses angeordnet, wobei der erste Ausgang des Kondensators an der Vorderseite des Gehäuses angeordnet ist und durch die Ablenkplatte von den ersten Ansaugöffnungen an der Frontfläche des Gehäuses getrennt ist.

Durch diese Maßnahmen läßt sich ein günstiger Aufbau der erfindungsgemäßen Vorrichtung erreichen und eine vorteilhafte Luftführung innerhalb des Gehäuses erreichen.

Gemäß einer weiteren Ausführung der Erfindung mündet das Gebläse druckseitig in eine Verteilkammer am zweiten Eingang des Kondensators, in die die Lamellen mit ihren Hohlräumen münden.

Auf diese Weise läßt sich eine gute Verteilung der aus dem Gebläse ausströmenden Mischluft auf die einzelnen Lamellen erreichen.

In weiterer Ausgestaltung der Erfindung ist das Gebläse neben dem Kondensator durch die Verteilkammer davon getrennt angeordnet, wobei das Gebläse als Radialgebläse ausgebildet ist, das an seiner Unterseite oder seiner Oberseite eine Ansaugöffnung aufweist, die in einen Saugraum mündet, mit dem die ersten und zweiten Ansaugöffnungen strömungsmäßig verbunden sind.

Auf diese Weise läßt sich eine günstige Luftführung innerhalb des Gehäuses erreichen, wobei gleichzeitig eine günstige räumliche Anordnung gewährleistet ist.

Gemäß einer weiteren Ausgestaltung der Erfindung bestehen die Lamellen des Kondensators einem guten wärmeleitfähigen Material, vorzugsweise aus Aluminium, und sind an ihren axialen Enden an den Seitenwänden mittels eines Vergußmaterials befestigt und gegenüber diesen derart abgedichtet, daß an den axialen Enden der Lamellen deren Hohlräume durch die Seitenwände zur Bildung des zweiten Eingangs und des zweiten Ausgangs ausmünden.

Durch diese Maßnahmen wird die Intensität der Wärmeübertragung zwischen dem auf dem ersten Strömungsweg zwischen den Lamellen strömenden Fluid und der auf dem zweiten Strömungsweg durch die Lamellen strömenden Mischluft verbessert und gleichzeitig eine gute Abdichtung zwischen den beiden Strömungswegen gewährleistet. Dabei kann mittels der Vergußmasse gleichzeitig eine elektrische Trennung zwischen den Seitenwänden, die vorteilhaft aus Edelstahlblech bestehen können, und den Lamellen erreicht, sofern diese aus einem anderen Metall, wie etwa Aluminium bestehen, um so die Bildung eines voltaischen Elements zu vermeiden.

In weiterer Ausgestaltung der Erfindung wird die Leistung des Gebläses in Abhängigkeit von den Betriebsparametern des Kondensators gesteuert, wozu vorzugsweise am Kondensator ein Temperatursensor vorgesehen ist, dessen Ausgangssignal einer automatischen Steuereinrichtung zur Steuerung der Drehzahl des Gebläses zugeführt wird.

Auf diese Weise kann die Kondensationsleistung des Kondensators in vorteilhafter Weise an den Dampfanfall angepaßt werden.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Explosionsdarstellung der erfindungsgemäßen Vorrichtung, wobei einzelne Bestandteile der Vorrichtung zur Kennzeichnung ihrer Einbaulage auseinandergezogen dargestellt sind;
- Fig. 2: eine Aufsicht der erfindungsgemäßen Vorrichtung bei abgenommener Deckfläche und herausgenommenem Kondensator und Gebläse;
- Fig. 3: einen Querschnitt durch die erfindungsgemäße Vorrichtung im Bereich des Dampfkondensators;
- Fig. 4: eine schematische Darstellung einer abgewandelten Ausführung des Kondensators;
- Fig. 5: eine schematische Darstellung einer weiteren Abwandlung des Kondensators und
- Fig. 6: eine nochmalige Abwandlung des Kondensators in schematischer Darstellung.

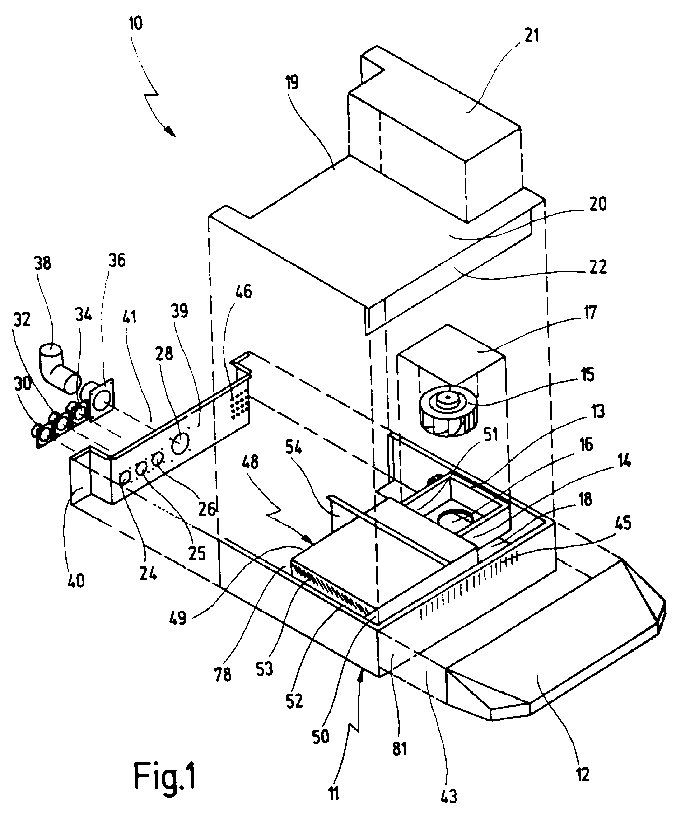

In Fig. 1 ist eine erfindungsgemäße Vorrichtung insgesamt mit der Ziffer 10 bezeichnet. Die erfindungsgemäße Vorrichtung ist als Dunstabzugshaube ausgebildet, die in Verbindung mit Öfen aller Art, insbesondere in Verbindung mit Bäckereiöfen, Kombidämpfern und dergleichen verwendet werden kann. Darüber hinaus kann eine derartige Vorrichtung jedoch auch zur Behandlung von feuchter Abluft genutzt werden, die aus anderen Quellen stammt.

Infolge des hohen Wirkungsgrades der erfindungsgemäßen Vorrichtung 10 kann diese auch in Kombination mit relativ großen Öfen oder mit mehreren Öfen verwendet werden, die z.B. über geeignete Leitungen an deren Rückseite miteinander verbunden sind.

Die erfindungsgemäße Vorrichtung 10 weist ein im wesentlichen quaderförmiges Gehäuse 11 auf, das vorzugsweise aus Edelstahlblech hergestellt ist, und das eine Vorderseite 43 und eine Rückseite 44 besitzt. An der Vorderseite 43 ist ein Haubenteil 12 angebaut, das nach unten hin offen ist, wobei eine Reihe von ersten Ansaugöffnungen 45 im Bereich der Frontfläche 81 gebildet sind, die das eigentliche Gehäuse 11 nach vorne abschließt.

Die Rückseite 44 des Gehäuses 11 ist durch ein rückwärtiges Abschlußblech 39 abgeschlossen, das an seinen beiden Außenseiten nach hinten hervorstehende Vorsprünge 40 besitzt, zwischen denen ein Freiraum 41 gebildet ist. Dieser Freiraum 41 erlaubt es, daß die Vorrichtung 10 unmittelbar mit den Vorsprüngen 40 an eine Wandfläche angrenzend angeordnet werden kann, da der Freiraum 41 ausreichend Platz bietet, um die notwendige Verrohrung anzuschließen und auch die Ansaugung von Kühlluft erlaubt, wie nachfolgend noch näher beschrieben wird. In der in Fig. 1 links erkennbaren Hälfte des Abschlußbleches 39 sind nebeneinander drei Eintrittsöffnungen 24, 25, 26 erkennbar, an die Rohre bzw. Rohrstutzen 30, 32, 34 angeschraubt sind, an die Zuführleitungen für die Zuführung von feuchtem Fluid, die in der erfindungsgemäßen Vorrichtung behandelt werden soll, angeschlossen werden können. Typischerweise werden über diese Rohre 30, 32, 34 gleich mehrere Öfen angeschlossen, um eine gemeinsame Behandlung der Abluft in der erfindungsgemäßen Vorrichtung zu ermöglichen. Neben der Eintrittsöffnung 26 befindet sich am rückwärtigen Abschlußblech 39 eine Austrittsöffnung 28 von größerem Durchmesser, auf die ein Rohr bzw. Rohrstutzen 36 aufgeschraubt wird, wobei es sich z.B. um einen üblichen Normanschluß für Abflußrohre DN 130 handeln kann. Durch ein Winkelstück 38 ist angedeutet, daß hieran eine geeignete Abluftleitung angeschlossen werden kann. An dem in Fig. 1 erkennbaren rechten Ende des rückwärtigen Abschlußbleches 39 vor dem sich anschließenden Vorsprung 40 sind zweite Ansaugöffnungen 46 für die Ansaugung von Kühlluft vorgesehen.

In dem in Fig. 1 erkennbaren linken Teil des Gehäuses 11 ist ein quaderförmig ausgebildeter Dampfkondensator 48 erkennbar, der an seiner dem Abschlußblech 39 zugewandten Rückseite einen ersten Eingang 49 und seiner Vorderseite einen ersten Ausgang 50 aufweist, um so einen ersten Strömungsweg zu bilden, und der einen zweiten Strömungsweg quer dazu von einem zweiten Eingang 51 an der in Fig. 1 rechts erkennbaren Seitenfläche zu einem zweiten Ausgang 52 an der gegenüberliegenden Seitenfläche bildet.

Rechts neben dem Kondensator 48 ist ein Gebläsegehäuse 14 vorgesehen, in das ein Gebläserad 15 eines Gebläses von oben eingebaut wird und durch eine Abdeckplatte 17 verschlossen wird.

Das Gebläse 13 ist als Radialgebläse ausgebildet, das durch eine Ansaugöffnung 16 an der Unterseite des Gebläsegehäuses 14 aus einem darunter gebildeten Saugraum 18 ansaugt und an seiner linken Seite druckseitig in den Kondensator 48 einmündet, so daß das vom Gebläse 13 druckseitig ausgegebene Luftgemisch an den axialen Enden von Lamellen 53, die im Kondensator 48 in Querrichtung angeordnet sind, in Hohlräume eintreten kann, von denen die Lamellen durchsetzt sind.

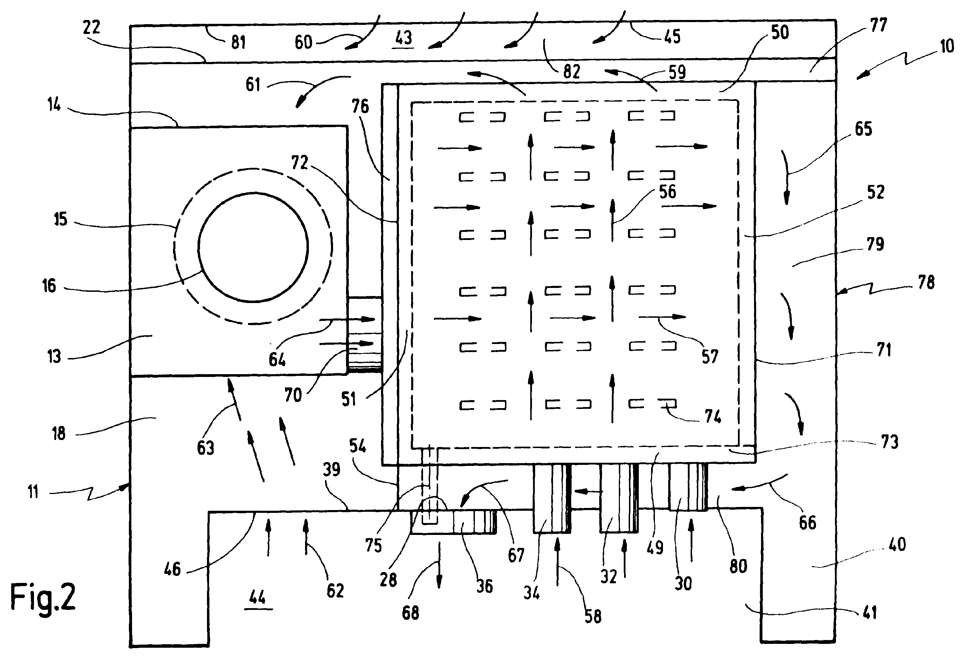

In Fig. 1 ist ferner noch ein Trennblech 54 erkennbar, das vom Kondensator 48 aus nach hinten bis zum rückwärtigen Abschlußblech 39 hervorsteht, um so einen luftmäßig gegenüber dem Saugraum 18 unterhalb des Gebläses 13 getrennten Austrittskanal 78 um den Kondensator 48 herum zu bilden, wie nachfolgend noch anhand von Fig. 2 erläutert wird.

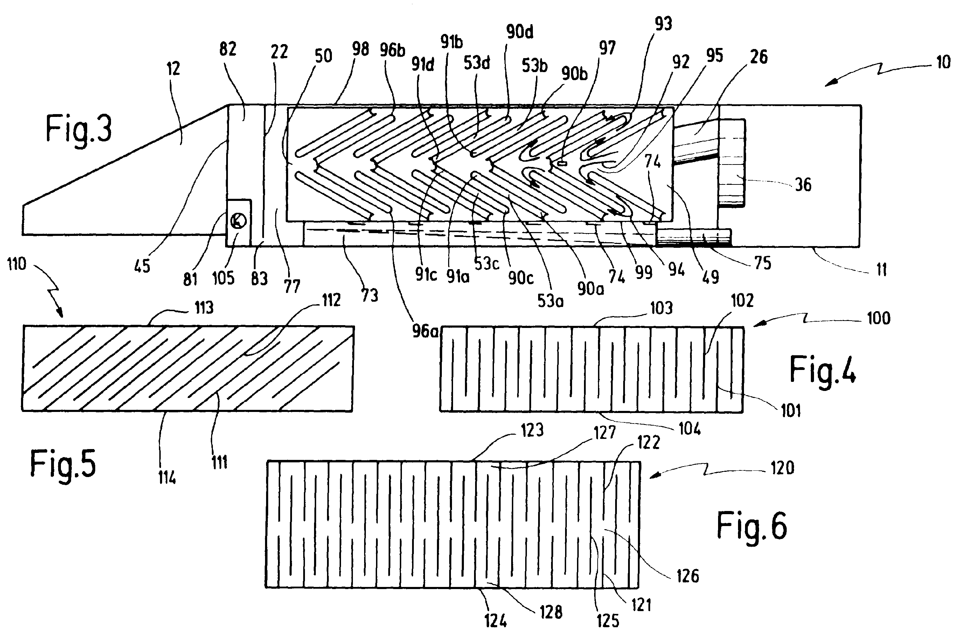

Im oberen Bereich von Fig. 1 ist eine Deckfläche 19 erkennbar, die aus einem ersten Blechteil 20 und einem zweiten Blechteil 21 besteht, die nacheinander auf der Oberseite der Vorrichtung 10 nach Einbau des Kondensators 48 und des Gebläses 13 montiert werden. Vom vorderen Ende des ersten Blechteils 20 aus steht eine Ablenkplatte 22 rechtwinklig nach unten hervor, die in ihrer Einbaulage zwischen dem ersten Ausgang 50 des Kondensators 48 und der vorderen Frontfläche 81 angeordnet ist, wobei am unteren Ende ein Spalt zur Bodenfläche hin frei bleibt, wie nachfolgend noch anhand von Fig. 3 erläutert werden wird.

Es sei nun auf die Fig. 2 und 3 Bezug genommen, die die Vorrichtung 10 in der Aufsicht von oben nach Abnahme von Deckfläche 19, von Gebläse 13 und des Kondensators 48 bzw. einen Querschnitt durch die Vorrichtung 10 zeigen.

Der Kondensator 48 ist durch zwei Seitenflächen, die in Fig. 2 mit den Ziffern 71 und 72 angedeutet ist, abgeschlossen, zwischen denen die Lamellen 53 verlaufen.

Aufbau und Anordnung der hohlen Lamellen 53 sind aus Fig. 3 näher zu ersehen.

Der Kondensator 48 weist eine obere Folge von Lamellen auf, von denen beispielhaft die benachbarten Lamellen 53b und 53d bezeichnet sind, sowie eine untere Folge von Lamellen, von denen beispielhaft benachbarte Lamellen 53a und 53c bezeichnet sind, auf. Die oberen Lamellen 53b, 53d sind in einem Winkel von ca. 50° bis 70° zur Deckfläche 98 des Kondensators geneigt und zueinander parallel hintereinander angeordnet, wobei die unteren Lamellen 53a, 53c im gleichen Winkel, jedoch nach unten in Bezug auf eine Bodenfläche 99 geneigt zueinander parallel, hintereinander angeordnet sind. Es entstehen somit paarweise Lamellen 53a, 53b bzw. 53c, 53d, die zueinander V-förmig angeordnet sind. Dabei sind abwechselnd jeweils eine untere Lamelle 53a und eine obere Lamelle 53b derart angeordnet, daß sie mit ihren zur Bodenfläche 99 bzw. zur Deckfläche 98 hinweisenden Kanten 90a bzw. 90b gegen die Bodenfläche 99 bzw. die Deckfläche 98 unter Wahrung einer Durchtrittsöffnung 95 in der Mitte im Bereich zwischen den zueinander weisenden Kanten 91a bzw. 91b abgedichtet sind, jeweils gefolgt von einem Paar von Lamellen 53c bzw. 53d, die mit ihren zueinander weisenden Kanten 91c, 91d in der Mitte gegeneinander abgedichtet sind und zur Bodenfläche 99 bzw. zur Deckfläche 98 hin jeweils eine Durchtrittsöffnung 96a bzw. 96b freilassen.

Somit kann sich ein Fluid, das vom ersten Eingang 49 an der Rückseite des Kondensators 48 in Richtung der Pfeile 92 durch die erste Durchtrittsöffnung 95 in den Kondensator 48 eintritt, in der oberen Hälfte des Kondensators 48 und in der unteren Hälfte des Kondensators 48 jeweils auf einem mäanderförmigen Weg zwischen den einzelnen Lamellen hindurchbewegen, wie durch Pfeile 93, 94 angedeutet ist. Durch diese Anordnung wird ein intensiver Wärmeaustausch zwischen einem Fluid, das am ersten Eingang 49 in den Kondensator eintritt, und das sich jeweils in der oberen und unteren Hälfte des Kondensators 48 um die Lamellen 53a bis 53d und um die Lamellen 53a bis 53d herumbewegt, gewährleistet. Es findet somit ein äußerst intensiver Wärmeaustausch zwischen einem vom ersten Eingang 49 zum ersten Ausgang 50 des Kondensators 48 hindurchströmenden Fluid und einem durch die Hohlräume der Lamellen 53a bis 53d hindurchströmenden Fluid statt.

Die Lamellen 53 bzw. 53a bis 53d sind durch geeignete Schlitze in den Seitenflächen 71 bzw. 72 hindurchgeführt und mittels einer geeigneten Vergußmasse, z.B. Silikon, gegenüber diesem luftdicht vergossen, wobei gleichzeitig eine elektrische Isolierung zwischen den Lamellen 53 bzw. 53a bis 53d, die vorzugsweise aus Aluminium bestehen, und den Seitenflächen 71, 72 erreicht wird, die vorzugsweise aus Edelstahl, wie auch die übrigen Teile der Vorrichtung 10 bestehen. Die elektrische Isolierung zwischen Seitenflächen 71 und 72 und Lamellen 53 bzw. 53a bis 53d vermeidet die Entstehung elektrischer Potentiale infolge von unterschiedlichen Metallen. Es versteht sich, daß in diesem Falle auch die Deckfläche 98 und die Bodenfläche 99, die mit den Lamellen 53 bzw. 53a bis 53d unmittelbar in Kontakt stehen, aus Aluminium bestehen und gegenüber dem übrigen Teil des Gehäuses 11 isoliert sind.

In Fig. 3 ist ferner noch die Ablenkplatte 22 erkennbar, die zwischen dem ersten Ausgang 50 des Kondensators 48 und der Frontfläche 81 angeordnet ist, wobei zur Bodenfläche des Gehäuses 11 hin ein Schlitz 83 frei bleibt. Durch diese Ablenkplatte 22 wird eine Zwischenkammer 77 zwischen dem ersten Ausgang 50 des Kondensators 48 und der Ablenkplatte 22, sowie eine Saugkammer 82 zwischen der Ablenkplatte 22 und der Frontfläche 81 gebildet, in der die ersten Ansaugöffnungen 45 vorgesehen sind, wobei die Saugkammer 82 über den Schlitz 83 mit der Zwischenkammer 77 verbunden ist.

Unterhalb des Kondensators 48 ist eine Kondensatauffangwanne 73 angeordnet, die von allen vier Seiten zur Mitte hin schräg zulaufende Flächen aufweist und an die ein Kondensatablauf 75 angeschlossen ist. In der Bodenfläche 99 des Kondensators 48 ist eine Folge von Kondensatabflußöffnungen 74 vorgesehen, durch die von den Lamellen 53 bzw. 53a bis 53d nach unten abtropfendes Kondensat in die Kondensatauffangwanne 73 austreten kann. Die Kondensatabflußöffnungen 74 sind, wie in Fig. 3 erkennbar, derart angeordnet, daß in Richtung der Pfeile 93, 94 hindurchströmendes Fluid nicht nach unten in die Kondensatauffangwanne 73 austreten kann, d.h. die Öffnungen sind jeweils entgegen der Strömungsrichtung immer in unmittelbarer Nähe der Berührungspunkte zwischen den Kanten 90a und der Bodenfläche 99 angeordnet.

Die Anordnung von Kondensator 48 und Gebläse 13, sowie die sich ergebenden Fluidströme innerhalb des Gehäuses 11 sind im einzelnen aus Fig. 2 zu ersehen. Bei der Darstellung gemäß Fig. 2 befindet sich der Kondensator 48 auf der rechten Seite des Gehäuses 11 (bzw. linke Seite bei der Darstellung gemäß Fig. 1), während unmittelbar neben dem Kondensator 48 das Gebläsegehäuse 14 für das Gebläse 13 eingebaut ist. Das Gebläsegehäuse 14 ist quaderförmig ausgebildet und weist an seiner Unterseite, die in Fig. 2 erkennbare Eintrittsöffnung 16 auf, über die aus dem darunter liegenden Saugraum 18 angesaugt werden kann. Das Gebläse 13 ist über einen Rohrstutzen 70 druckseitig mit einer am zweiten Eingang 51 des Kondensators 48 gebildeten Verteilkammer 76 verbunden, durch die aus dem Gebläse 13 austretendes Fluid auf die verschiedenen Lamellen 53 bzw. 53a bis 53d verteilt wird, um diese in Richtung des Pfeiles 57 auf einem zweiten Strömungsweg 57 zu durchströmen, der quer zu einem ersten Strömungsweg 56 vom ersten Eingang 49 zum ersten Ausgang 50 verläuft. An die in Fig. 1 rechte Seitenfläche 71 des Kondensators 48 schließt sich ein Austrittskanal 78 an, mit einem ersten Abschnitt 79, der parallel zu der Seitenfläche 71 nach hinten verläuft und dann rechtwinklig in einen zweiten Abschnitt 80 übergeht, der zwischen dem rückwärtigen Ende des Kondensators 48, dem rückwärtigen Abschlußblech 39 und dem Trennblech 54 gebildet ist.

Es ergeben sich nun folgende Strömungsverhältnisse innerhalb der Vorrichtung 10.

Feuchtes Fluid tritt in Richtung des Pfeiles 58 durch die drei Rohre 30, 32, 34 in den ersten Eingang 49 des Kondensators 48 ein, durchströmt diesen auf dem ersten Strömungsweg 56 in der in Fig. 3 gezeigten mäanderförmigen Weise, um am ersten Ausgang 50 in die Zwischenkammer 77 auszutreten. Hierbei wird das Fluid stark abgekühlt, so daß darin enthaltenes Wasser zum größten Teil auskondensiert wird.

Da die Saugkammer 18 strömungsmäßig mit der Zischenkammer 77 und der Saugkammer 82 verbunden ist, wird vom Gebläse 13 das am ersten Ausgang 50 aus dem Kondensator 48 austretende Fluid in Richtung der Pfeile 59 zum Gebläse 13 hin angesaugt, während gleichzeitig über die ersten Ansaugöffnungen 45 an der Frontfläche 81 aus der Umgebung Luft angesaugt wird, wie durch die Pfeile 60 und 61 angedeutet ist. Gleichzeitig wird über die zweiten Ansaugöffnungen 46, die sich am rückwärtigen Abschlußblech 39 befinden, Kühlluft angesaugt, wie durch die Pfeile 62 und 63 angedeutet ist. Druckseitig aus dem Gebläse 13 austretende Mischluft tritt über den Rohrstutzen 70 in die Verteilkammer 76 zum zweiten Eingang 51 des Kondensators 48 aus und gelangt nun auf dem zweiten Strömungsweg 57 durch die hohlen Lamellen zum zweiten Ausgang 52, tritt dann in den Austrittskanal 78 aus, strömt in Richtung der Pfeile 65 nach hinten durch den ersten Abschnitt 79 und den zweiten Abschnitt 80 des Austrittskanals 78, um die Rohre 30, 32, 34 zu umströmen und schließlich in Richtung der Pfeile 67, 68 aus dem Rohr 36 in ein Abluftrohr auszuströmen.

Dabei wird feuchtes Fluid, das in den Kondensator 48 am ersten Eingang 49 eintritt und auf dem ersten Strömungsweg 56 durch die Zwischenräume zwischen den Lamellen 53 bzw. 53a bis 53d durch den Kondensator 48 hindurch bis zum ersten Ausgang 50 strömt, stark abgekühlt, wobei das Fluid getrocknet wird und anfallendes Kondensat über die Kondensatabflußöffnungen 74 in die Kondensatauffangwanne 73 gelangt.

Da vom Gebläse 13 das in die Zwischenkammer 77 gelangende Fluid mit über die ersten Ansaugöffnungen 45 an der Frontfläche 81 des Gehäuses 11 eintretender Kühlluft und mit über die zweiten Ansaugöffnungen 46 am rückwärtigen Abschlußblech 39 eintretender Kühlluft vermischt wird, wird die Temperatur dieser Mischluft stark erniedrigt. Diese Mischluft tritt nun durch die hohlen Lamellen auf dem zweiten Strömungsweg 57 quer durch den Kondensator 48 hindurch und schließlich in den Austrittskanal 78 aus. Durch dieses auf dem zweiten Strömungsweg 57 strömende Fluid, das auch als Sekundärluft bezeichnet werden kann, wird das auf dem ersten Strömungsweg 56 durch den Kondensator 56 quer dazu hindurchströmende Fluid, das auch als Primärluft bezeichnet werden kann, stark abgekühlt, wobei sich durch die Querströmung das noch mit relativ hoher Temperatur am ersten Eingang 49 eintretende feuchte Fluid im Verlaufe des ersten Strömungsweges 56 stark abkühlt, so daß ein hoher Abscheidegrad des Kondensators 48 erreicht wird. Andererseits wird dabei gleichzeitig die Mischluft oder Sekundärluft, die auf dem zweiten Strömungsweg 57 quer zum ersten Strömungsweg 56 durch den Kondensator 48 gelangt, stark aufgeheizt. Messungen haben ergeben, daß die Sekundärluft am vorderen Ende des Austrittskanals 78 eine Temperatur zwischen etwa 20°C und 80°C haben kann, die sich zur Mitte des ersten Abschnittes 79 des Austrittskanals 78 auf eine Temperatur zwischen etwa 20°C und 130°C erhöht, um schließlich im zweiten Abschnitt 80 des Austrittskanals 78 eine Temperatur von ca. 50°C bis 200°C zu erreichen. Diese Luft vermischt sich im Austrittskanal 78 und erreicht eine Temperatur von unter 100°C, so daß im zweiten Abschnitt 80 des Austrittskanals 78 eine Vorkühlung des über die Rohre 30, 32, 34 eintretenden Fluids erreicht wird. Die sehr trockene Abluft tritt dann über das Rohr 36 aus der Vorrichtung 10 aus.

Durch die zuvor beschriebene Funktionsweise liegt der Kondensationspunkt des Fluids am ersten Ausgang 50 des Kondensators 48 nur 2°C bis 5°C über dem Kondensationspunkt der Umgebungsluft des Raumes, in dem sich die Vorrichtung 10 befindet. Zusätzlich wird dem getrockneten Fluid aus dem Kondensator 48 Kühlluft über die ersten Ansaugöffnungen 45 und zweiten Ansaugöffnungen 46 zugemischt, woraufhin die getrocknete kalte Mischluft auf dem zweiten Strömungsweg nachträglich erhitzt wird und somit der Feuchtesättigungsgrad weiter herabgesetzt wird. Durch diese Funktionsweise wird gewährleistet, daß sich in dem Raum, in dem sich die Vorrichtung 10 befindet, kein Kondensat bzw. keine Feuchte durch die Abluft aus der Vorrichtung bilden kann, da die Abluft nur noch eine Restfeuchte von durchschnittlich 5% bis maximal 15% relativer Feuchte aufweist.

In Fig. 3 ist zusätzlich ein Sensor 97 dargestellt, der als Temperaturfühler ausgebildet ist und sich unmittelbar hinter der Durchtrittsöffnung 95 für den eintretenden Dampf des Kondensators befinden kann. Dieser Sensor 97 kann in Verbindung mit einer zugeordneten automatischen Steuerung, die in Fig. 3 schematisch mit der Ziffer 105 angedeutet ist, dazu verwendet werden, das Gebläse 13 vollautomatisch zu steuern, um die Gebläseleistung und damit die Kondensationsleistung an den Dampfanfall, d.h. an die Menge des zugeführten Dampfes, an die Temperatur und die Feuchte anpassen zu können.

## Patentansprüche

1. Vorrichtung zum Kondensieren von Dampf, mit einem Dampfkondensator (48, 100, 110, 120), mit einem Gebläse (13) mit einer Eintrittsöffnung (24, 25, 26) zum Absaugen von Fluid, die über einen ersten Strömungsweg (56) von einem ersten Eingang (49) des Dampfkondensators (48, 100, 110, 120) zu einem ersten Ausgang (50) des Dampfkondensators (48) mit einer Austrittsöffnung (28) zum Austritt von Fluid gekoppelt ist, dadurch gekennzeichnet, daß der Dampfkondensator (48, 100, 110, 120) einen zweiten (57), vom ersten (56) Strömungsweg vollständig getrennten Strömungsweg mit einem zweiten Eingang (51) und einem zweiten Ausgang (52) aufweist, daß der erste Ausgang (59) mit einer Mischeinrichtung (13, 18) zur Zumischung von Kühlluft gekoppelt ist, und daß der Ausgang der Mischeinrichtung (13, 18) mit dem zweiten Eingang des Dampfkondensators (48, 100, 110, 120) gekoppelt ist.

2. Vorrichtung nach Anspruch 1, dadurch gekennzeichnet, daß der Dampfkondensator (48, 100, 110, 120) zwei einander gegenüber liegende Seitenwände (71, 72) aufweist, zwischen denen sich eine Mehrzahl von hohlen Lamellen (53, 53a,b,c,d; 101, 102; 111, 112; 121, 122, 125) erstreckt, zwischen denen der erste Strömungsweg (56) gebildet ist, und innerhalb derer quer zum ersten Strömungsweg (56) der zweite Strömungsweg (57) gebildet ist.

3. Vorrichtung nach Anspruch 2, dadurch gekennzeichnet, daß der Dampfkondensator (48; 100; 110; 120) eine Bodenfläche (99; 104; 114; 124) und eine Deckfläche (98; 103; 113; 123) aufweist, zwischen denen die Lamellen (53, 53a-d; 101, 102; 111, 112; 121, 122, 125) derart hintereinander angeordnet sind, daß sich mindestens ein mäanderförmiger Durchflußweg zwischen dem ersten Eingang (49) und dem ersten Ausgang (50) des Dampfkondensators (48; 100; 110; 120) ergibt.

4. Vorrichtung nach Anspruch 3, dadurch gekennzeichnet, daß die Lamellen (101, 102; 111, 112) zueinander parallel angeordnet sind, und daß benachbarte Lamellen (101, 102; 112, 113) abwechselnd die Deckfläche (103; 113) und die Bodenfläche (104; 114) berühren.

5. Vorrichtung nach Anspruch 4, dadurch gekennzeichnet, daß die Lamellen (111, 112) in Bezug auf die Deckfläche (113) und Bodenfläche (114) geneigt angeordnet sind.

6. Vorrichtung nach Anspruch 3, dadurch gekennzeichnet, daß die Lamellen (121, 122, 125) zueinander parallel angeordnet sind, wobei jeweils von der Deckfläche (123) und der Bodenfläche (124) ausgehende Lamellen (121, 122) in der Mitte eine Durchtrittsöffnung (126) frei lassen, die von zwischen Bodenfläche (124) und Deckfläche (123) angeordneten Lamellen (125) gefolgt sind, die zur Bodenfläche (124) und zur Deckfläche (123) hin jeweils eine Durchtrittsöffnung (127, 128) frei lassen.

7. Vorrichtung nach einem der Ansprüche 3 bis 5, dadurch gekennzeichnet, daß die jeweils oberen Lamellen (53b, d) und die jeweils unteren Lamellen (53a, c) zueinander parallel und geneigt zur Deckfläche (98) bzw. zur Bodenfläche (99) angeordnet sind, und daß jeweils von der Deckfläche (98) und der Bodenfläche (99) ausgehende Lamellen (53a, b) in der Mitte eine Durchtrittsöffnung (95) frei lassen, die von zwei in der Mitte winklig zusammenlaufenden Lamellen (53c, d) gefolgt sind, die zur Bodenfläche (99) und zur Deckfläche (98) hin jeweils eine Durchtrittsöffnung (96a, b) freilassen.

8. Vorrichtung nach einem der vorhergehenden Ansprüche, dadurch gekennzeichnet, daß in der Bodenfläche (99) des Kondensators (48) Kondensatabflußöffnungen (74) vorgesehen sind, die sich entgegen der Strömungsrichtung nach unten öffnen und unterhalb derer eine Kondensatauffangwanne (73) vorgesehen ist.

9. Vorrichtung nach einem der vorgehenden Ansprüche, dadurch gekennzeichnet, daß die Mischeinrichtung (13, 18) das Gebläse (13) umfaßt, das saugseitig mit dem ersten Ausgang (50) des Dampfkondensators (48) verbunden ist und das saugseitig mit Ansaugöffnungen (45, 46) für Umgebungsluft verbunden ist.

10. Vorrichtung nach Anspruch 9, dadurch gekennzeichnet, daß das Gebläse (13) druckseitig mit dem zweiten Eingang (51) des Kondensators (48) verbunden ist.

11. Vorrichtung nach einem der vorhergehenden Ansprüche, dadurch gekennzeichnet, daß der zweite Ausgang des Kondensators (48) in einen Austrittskanal (78) mündet, der zumindest teilweise um den Kondensator (48) außen herumgeführt ist und diesen zumindest im Bereich seines ersten Eingangs (49) kühlt.

12. Vorrichtung nach Anspruch 11, dadurch gekennzeichnet, daß der erste Eingang (49) des Kondensators (48) mit zumindest einem Rohr (30, 32, 34, 36) verbunden ist, das durch den Austrittskanal (78) geführt ist.

13. Vorrichtung nach einem der vorhergehenden Ansprüche, gekennzeichnet durch ein geschlossenes Gehäuse (11), an dessen Vorderseite erste Ansaugöffnungen (45) zur Absaugung von Wrasen vorgesehen sind und bei dem die Austrittsöffnung (28) und die Eintrittsöffnung (24, 25, 26) vorzugsweise an seiner Rückseite (44) vorgesehen sind.

14. Vorrichtung nach Anspruch 13, dadurch gekennzeichnet, daß die ersten Ansaugöffnungen (45) in einer Frontfläche (81) des Gehäuses (11) ausgebildet sind, und daß ein gegenüber der Frontfläche (81) nach vorn vorstehender und nach unten offener Haubenvorsprung (12) vorgesehen ist.

15. Vorrichtung nach Anspruch 13 oder 14, dadurch gekennzeichnet, daß zweite Ansaugöffnungen (46) zur Ansaugung von Kühlluft an einer anderen Seite des Gehäuses (11) vorgesehen sind.

16. Vorrichtung nach Anspruch 15, dadurch gekennzeichnet, daß an der Rückseite (44) mindestens ein Rohr (24, 25, 26) für die Zuführung von Fluid in den Kondensator (48) vorgesehen ist und mindestens ein Austrittsrohr (28) für den Austritt von Fluid, und daß die zweiten Ansaugöffnungen (46) an der Rückseite (44) vorgesehen sind.

17. Vorrichtung nach einem der Ansprüche 13 bis 16, dadurch gekennzeichnet, daß vor dem ersten Ausgang (50) des Kondensators (48) eine Ablenkplatte (22) zur Umlenkung von auf dem ersten Strömungsweg (56) aus dem Kondensator (48) austretenden Fluid angeordnet ist.

18. Vorrichtung nach Anspruch 13 und 17, dadurch gekennzeichnet, daß die ersten Ansaugöffnungen (45) und eine zwischen der Ablenkplatte (22) und dem ersten Ausgang (50) gebildete Zwischenkammer (77) strömungsmäßig mit einer Saugseite des Gebläses (13) verbunden sind.

19. Vorrichtung nach Anspruch 15 und Anspruch 18, dadaurch gekennzeichnet, daß die zweiten Ansaugöffnungen (46) an der Rückseite (44) des Gehäuses (11) angeordnet sind und strömungsmäßig mit der Saugseite des Gebläses (13) verbunden sind.

20. Vorrichtung nach Anspruch 14 und 17, dadurch gekennzeichnet, daß der erste Eingang (49) des Kondensators (48) an der Rückseite (44) des Gehäuses (11) angeordnet ist, daß der erste Ausgang (50) des Kondensators (48) an der Vorderseite (43) des Gehäuses (11) angeordnet ist und durch die Ablenkplatte (22) von den ersten Ansaugöffnungen (45) an der Frontfläche (81) des Gehäuses (11) getrennt ist.

21. Vorrichtung nach Anspruch 2 und 20, dadurch gekennzeichnet, daß das Gebläse (13) druckseitig in eine Verteilkammer (76) am zweiten Eingang (51) des Kondensators (48) mündet, in den die Lamellen (53, 53a, b, c, d) mit ihren Hohlräumen münden.

22. Vorrichtung nach Anspruch 20 oder 21, dadurch gekennzeichnet, daß das Gebläse (13) neben dem Kondensator (48) durch den Verteilkammer (76) davon getrennt angeordnet ist, daß das Gebläse (13) als Radialgebläse ausgebildet ist, das an seiner Unterseite oder seiner Oberseite eine Ansaugöffnung (16) aufweist, die in einen Saugraum (18) mündet, mit dem die ersten und zweiten Ansaugöffnungen (45, 46) strömungsmäßig verbunden sind.

23. Vorrichtung nach einem der Ansprüche 2 bis 22, dadurch gekennzeichnet, daß die Lamellen (53, 53a-d) des Kondensators (48) aus einem gut wärmeleitfähigen Material, vorzugsweise aus Aluminium, bestehen und an ihren axialen Enden an den Seitenwänden (71, 72) mittels eines Vergußmaterials befestigt und gegenüber diesen derart abgedichtet sind, daß an den axialen Enden der Lamellen (53, 53a-d) deren Hohlräume durch die Seitenwände (71, 72) zur Bildung des zweiten Eingangs (51) und des zweiten Ausgangs (52) ausmünden.

24. Vorrichtung nach einem der vorhergehenden Ansprüche, dadurch gekennzeichnet, daß eine automatische Steuereinrichtung (105) zur Steuerung des Gebläses (13) in Abhängigkeit von zumindest einem Betriebsparameter des Kondensators vorgesehen ist.

25. Vorrichtung nach Anspruch 24, dadurch gekennzeichnet, daß am Kondensator (48) ein Temperatursensor (97) vorgesehen ist und daß die Steuereinrichtung (105) zur Regelung der Drehzahl des Gebläses (13) in Abhängigkeit vom Ausgangssignal des Temperatursensors (97) ausgebildet ist.
